Europäisches Patentamt

**European Patent Office**

**Office européen des brevets**

(11) Publication number: **0 022 319**

**A1**

(12) **EUROPEAN PATENT APPLICATION**

(21) Application number: **80302048.6**

(22) Date of filing: **17.06.80**

(51) Int. Cl.³: **B 65 D 85/50**
**A 01 G 5/00**

(30) Priority: **29.06.79 IL 57692**

(43) Date of publication of application:
**14.01.81 Bulletin 81/2**

(84) Designated Contracting States:
**CH DE FR GB IT LI NL**

(71) Applicant: **Singer, Itzhak**
**Moshav Sdeh Itzhak**
**Mobile Post Shomron(IL)**

(71) Applicant: **Singer, Eitan**
**Moshav Sdeh Itzhak**
**Mobile Post Shomron(IL)**

(72) Inventor: **Singer, Itzhak**
**Moshav Sdeh Itzhak**
**Mobile Post Shomron(IL)**

(72) Inventor: **Singer, Eitan**
**Moshav Sdeh Itzhak**
**Mobile Post Shomron(IL)**

(74) Representative: **Godwin, Edgar James et al,**
**MARKS & CLERK 57-60 Lincoln's Inn Fields**
**London, W.C.2A 3LS(GB)**

(54) **Means for flower packing.**

(57) An assembly for flower packing comprising a container (26) and at least one tray (24). The tray (20) comprises lateral support members (21) braced by a plurality of parallel holder assemblies (22) each of which assemblies comprises spaced from and parallel to each other a first row of aligned, identical, annular holder elements (23) and a second row of aligned, identical, split annular holder elements (24) of smaller diameter. Each pair of elements (23,24) has common axis (a), all such axes being parallel to each other.

Fig 2

EP 0 022 319 A1

- 1 -

Means for flower packing

The present invention concerns means for packing flowers for shipment.

In recent times the flower trade has developed very substantially and it is common practice to ship flowers over long distances by air and land transportation. For this purpose it is necessary to pack flowers, and such packing has to meet several requirements. Thus, for one, it is necessary to protect the flowers so that they arrive undamaged at the market place. Moreover, the packed flowers must be readily withdrawable so that no valuable time should be lost unduly between arrival and distribution. At the same time the price of packing per unit flower must be kept within reasonable limits to avoid the retain price of the flowers at their destination becoming prohibitive.

In the following specification and claims the term "flower" will be used for a complete unit comprising a stalk, and the floral part of the flower (beginning with the calyx and comprising the petals) will be referred to as "floral leaves".

For the prevention of damage to the flowers during transportation special attention must be given to the floral leaves. In accordance with one known method practised for example with the Gerbera flowers, the floral leaves of each individual flower are contained within a conical cup-shaped wrapper which is sled on the stalk through a suitable perforation in the bottom. This cup-shaped wrapper bears on the calux from below and when in position it somewhat compacts the floral leaves. A number of so-protected flowers are bundled together and the so-formed bundles are placed in suitable boxes or crates. Thus by this method the main attention is focussed on the floral leaves while the stalks remain essentially unprotected. Moreover, in accordance with this method for unpacking the flowers at their destination it is first necessary to withdraw each bundle from its box or crate, then undo it and finally withdraw the cup-shaped wrapper from each individual flower, and the sum total of these operations is time-consuming. Furthermore, during such packing, bundling and unpacking the floral leaves and stalks may be damaged.

By another method cardboard trays are used which fit pair-wise into a relatively flat cardboard box. In accordance with this method each tray comprises a plurality of slots each adapted for the passage of a stalk therethrough. When a tray is fully loaded it is placed inside the box with the stalks being bent so as to be sandwiched between the tray and the box. The slots are so dimensioned that the floral leaves cannot pass therethrough and they are thus retained on the upper side of the bottom forming with the bent stalks a nearly right angle. In accordance with this method the floral leaves are uncontained, which means that for flowers with naturally spread floral leaves, e.g. with Gerberas, a relatively large space is required for each flower with the consequence that this method is space-consuming. Furthermore, because of the sharp bend between the floral leaves and stalk inherent in this method, some of the flowers may suffer damage during shipping. Damage may also ensue to the floral leaves because of the fact that they are uncontained and therefore unprotected.

It is the object of the present invention to provide improved means for the packing of flowers for shipment, free of the various disadvantages of the known methods.

In accordance with the invention there is provided a tray for holding flowers for transportation, comprising lateral support members braced by a plurality of parallel holder assemblies, each of which assemblies comprises spaced from and parallel to each other a first row of aligned, identical, annular holder elements and a second row of aligned, identical, split annular holder elements of smaller diameter, each holder element of the first row being associated with a holder element of the second row to form a pair with a common axis, all such axes being parallel to each other.

In accordance with one embodiment of the invention said axes are inclined relative to the real or imaginary bottom of the tray.

In operation, each individual flower is held by an associated pair of holder elements with the floral leaves being contained within the upper annular holder member while the stalks penetrate through the lower one. The contained floral leaves are compacted which has the double advantage of affording protection during transportation and enables a relatively dense packing so that a significant space economy is achieved as compared to the known method.

For shipping a tray according to the invention is placed in a suitable box or crate. Where the axes of the holder members are inclined, the

- 4 -

stalks of the packed flowers are inclined accordingly and any bend between the floral leaves and the stalk is relatively slight with the formation of an obtuse angle as compared to the nearly rectangular bend in accordance with the known method.

Thus the invention also provides flower-packing assemblies comprising at least one tray of the kind specified and a container adapted to contain the tray(s).

In accordance with one embodiment the invention provides an assembly comprising a box and two trays of the kind specified adapted to be contained therein.

The invention still further provides boxes for use in assemblies of the kind specified.

Each annular holder member of the upper row is so dimensioned that by pulling the stalk it is possible to slide the compacted floral leaves therethrough. Upon emergence of the lower side the floral leaves regain their natural spread-out state. The stalk can be removed from the split lower annular holder element by withdrawing it through the split. It is thus seen that in accordance with the invention the flowers are compacted by two simple and swift operations which are performed by what practically amounts to one single manipulation. It should be noted that in accordance with the invention it is for the first time that a flower is unpacked by pulling it in the same direction in which it was inserted into the packing whereas in all previous methods the flower had to be unpacked by a reversal of the insertion operation. This new approach has turned out to be a significant improvement.

The invention thus provides a substantial advantage over the prior art in that it simplifies and thereby expedites the unpacking operation which, as already explained, is essential.

It is thus seen that the invention improves the packing of flowers for shipping in all three essential points, namely:

a) it affords good protection during shipment;

b) the operations of packing and unpacking are simple and brisk;

c) the packing density is increased whereby the space requirements and with it the packing price per unit flower are reduced.

The invention is illustrated, by way of example only, in the accompanying drawings in which:

Fig. 1 is a perspective view of a prior art packing unit currently in use;

Fig. 2 is a perspective view of a tray according to the invention inserted in a box;

Figs. 3-5 show three different operational phases in the insertion of a flower into a tray according to Fig. 2; and

Fig. 6 shows the manner in which a flower is withdrawn from a tray according to Fig. 2.

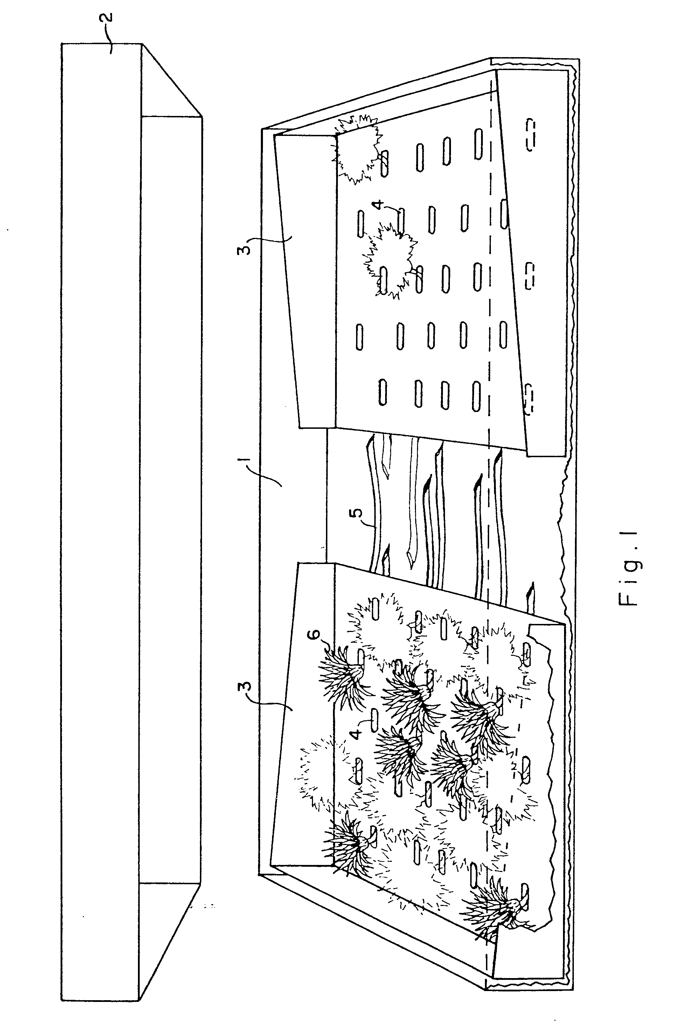

The prior art packing assembly shown in Fig. 1 comprises a flat cardboard box 1 fitted with a removable cover 2 and snugly holding two identical cardboard trays 3 facing each other and distanced from each other in the manner shown. Each tray 3 is open at the side that in the mounted position faces the other tray and the bottom comprises a plurality of slots 4 through each of which a stalk 5 can be threaded while the floral leaves 6 are retained on the upper side. It is seen from the figure that in the packed position a near right angle is formed between each stalk 5 and the floral leaves 6, and the stalks are in part tightly sandwiched between tray 3 and box 1. It is further seen from this figure that the packed floral leaves are in their natural, fully spread-out state, which means that the individual flowers have to be sufficiently spaced from each other that the floral leaves do not intermesh. In the particular case of the flowers here shown this means that in a row only every second slot 4 can be used.

For unpacking the flowers at their destination it is necessary to grip each flower at its floral leaves 6 and to pull it out of slot 4. This very fact is of disadvantage since in this way the floral leaves are liable to be damaged and special care has to be taken to avoid this, which obviously is time-consuming.

It is thus seen that this prior art flower packing assembly is space-consuming in that the flowers have to be placed at a distance from each other to avoid contact between the spread out floral leaves, does not afford sufficient protection for the floral leaves and requires special care during unpacking to avoid damage to the floral leaves.

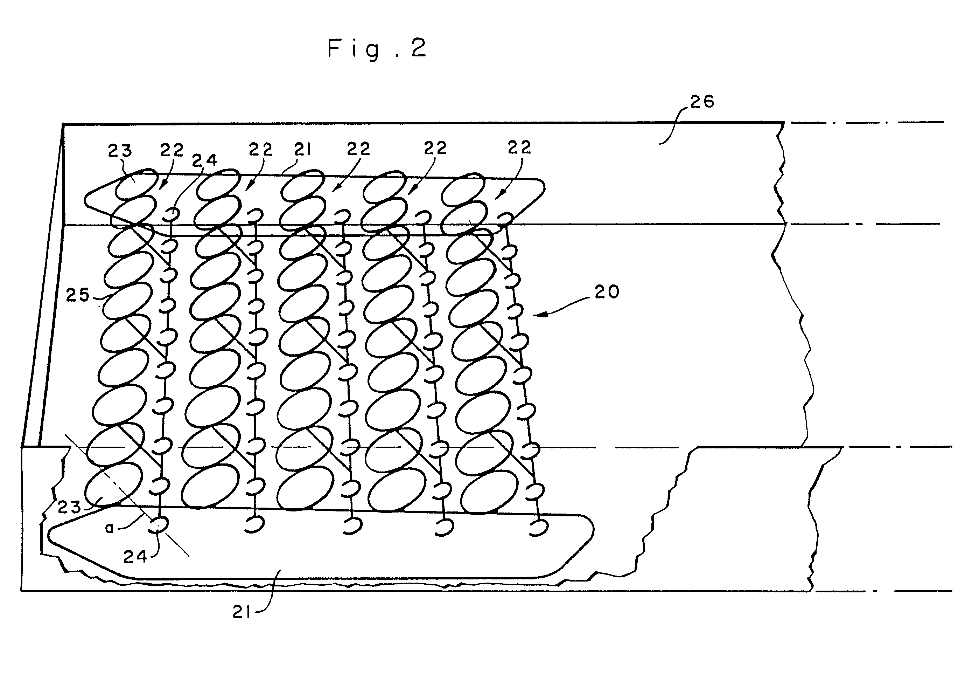

The tray 20 according to the invention shown in Fig. 2 comprises two identical lateral frames 21 braced by five holder assemblies 22. Each holder assembly 22 comprises an upper row of identical, aligned, annular holder elements 23 and in spaced relationship thereto a lower row of identical, aligned, split annular holder elements 24. Each element 23 is associated with an element 24 to form together a pair having a common central axis $a$ (only one of which is shown in Fig. 2) and adapted to hold one flower. All axes $a$ are parallel to each other and in the embodiment of Fig. 2 they are inclined with respect to the imaginary bottom of unit 20. The upper and lower rows of each holder assembly 22 are held together by a plurality of stays 25.

As also shown in Fig. 2 the tray 20 is placed within a box 26 which is essentially, similar to box 1 in Fig. 1 adapted to be covered by a removable cover (not shown). In the figure only a fragment of box 20 is shown, the box being adapted to hold snugly two trays 20 in spaced relationship similar to trays 3 in Fig. 1.

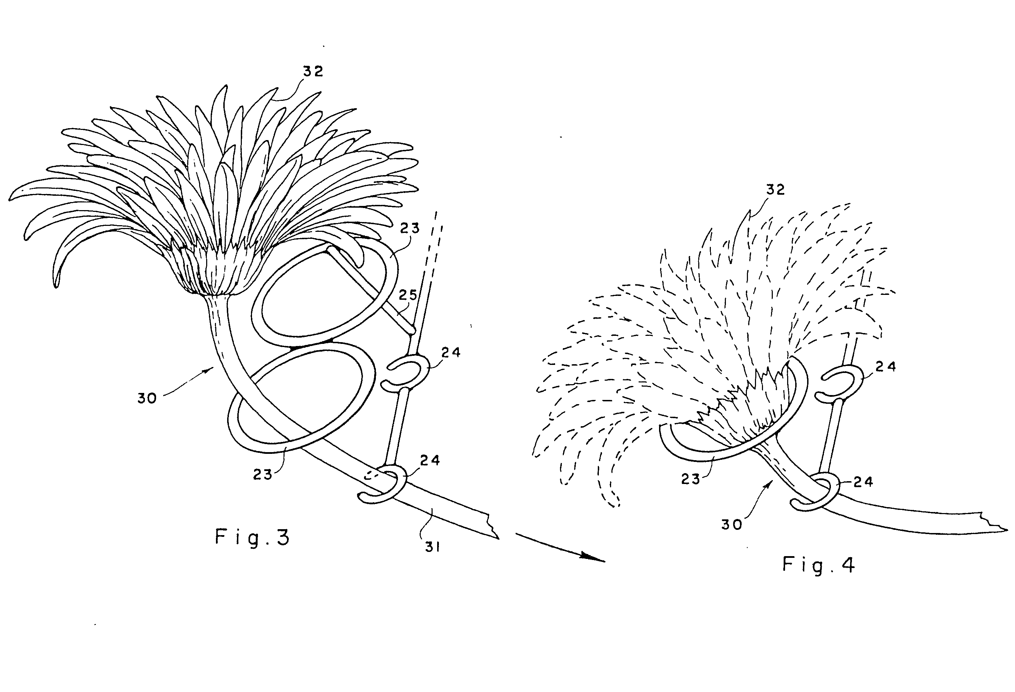

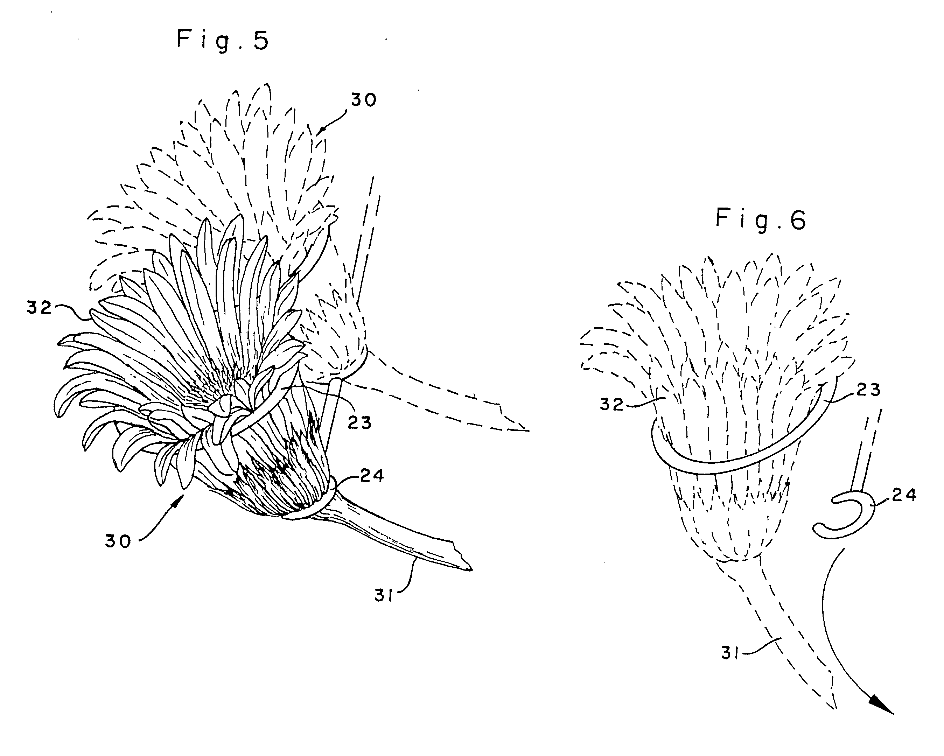

Figs. 3, 4 and 5 illustrate the insertion of a flower into a pair of holder elements 23, 24 of a tray according to Fig. 2. As seen in Fig. 3 a flower 30 is packed by threading its stalk 31 through a pair of holder elements 23 and 24. From the position of Fig. 3 the flower is pulled into the intermediary position of Fig. 4 where part of the floral leaves 32 is already contained within the upper, larger annular holder member 23. In Fig. 5 the final fully packed position is shown and it is seen that the floral leaves 32 are now contained within the upper annular holder member 23 in a somewhat compacted state, the lower part (the calyx region) thereof abutting the lower annular holder member 24. Fig. 5 further shows, in dashed lines, an adjacent packed flower 30 and it is seen that in accordance with the invention the packing density is significantly higher than in accordance with the prior art arrangement of Fig. 1, this being due to the fact that the floral leaves are contained within and compacted by the upper annular holder member 23.

The manner of withdrawal of a flower is shown in Fig. 6. As shown, the stalk 31 is removed from the lower annular holder member 24 by sliding it through the opening thereof into the position shown in Fig. 6 and from that position the operator pulls stalk 31 thereby drawing the floral leaves downwards through the upper annular holder member 23. This is a simple and swift operation and has the further advantage that the operator grips only the stalk and need not touch the floral leaves. In operation the downward pulling of the stalk and its removal from annular member 24 is performed in what practically amounts to one single, continuous manipulation.

The flower packing means according to the invention have been tried out particularly successfully with Gerberas. It will, however, be understood that these means may be adapted to other flowers as well.

The absolute and relative sizes of the annular holder members 23 and 24, their distance from each other and the lateral distances between individual holder members will depend on the size and nature of the flowers. As a rule, in accordance with the invention a tray of the kind illustrated before will be adapted to a particular type of flower.

- 9 -

Within the framework of the teachings of the present invention various modifications of structure and material are possible. Thus, for example, the lateral member 21 may be in the form of boards of any desired shape and size. There is also no criticality as to the material of the tray which may be made of metal, synthetic material, wood, cardboard, etc.

## CLAIMS

1. A tray (20) for holding flowers for transportation characterised in that it comprises lateral support members (21) braced by a plurality of parallel holder assemblies (22) each of which assemblies (22) comprises spaced from and parallel to each other a first row of aligned, identical, annular holder elements (23) and a second row of aligned, identical, split annular holder elements (24) of smaller diameter, each holder element (23) of the first row being associated with a holder element (24) of the second row to form a pair with a common axis ($\underline{a}$), all such axes ($\underline{a}$), being parallel to each other.

2. A tray according to claim 1, wherein the axes ($\underline{a}$), are inclined relative to the real or imaginary bottom of the tray.

3. A flower packing assembly comprising a container and at least one tray (20) according to claim 1 or 2 adapted to be contained therein.

4. An assembly according to claim 3 comprising a box (26) adapted to be covered and to contain two trays (20) according to claim 1 or 2.

5. For use in an assembly according to claim 3 or 4, a box (26) adapted to contain at least one tray according to claim 1 or 2.

Fig. I

Fig.2

Fig.3

Fig.4

Fig. 5

Fig. 6

0022319

| | | |
|---|---|---|
| European Patent Office | **EUROPEAN SEARCH REPORT** | Application number |
| | | EP 80 30 2048 |

| DOCUMENTS CONSIDERED TO BE RELEVANT | | | | CLASSIFICATION OF THE APPLICATION (Int. Cl.³) |
|---|---|---|---|---|
| Category | Citation of document with indication, where appropriate, of relevant passages | | Relevant to claim | B 65 D 85/50<br>A 01 G 5/00 |
| | US - A - 4 094 096 (HUYSSEN)<br> * Whole document * | | 1 | |
| | FR - A - 2 198 693 (PLUVIOSE)<br> * Whole document * | | 1 | |
| A | FR - A - 2 256 662 (CHUCHANA)<br> * Whole document * | | 1 | **TECHNICAL FIELDS SEARCHED (Int. Cl.³)** |
| A | US - A - 3 508 372 (WALLERSTEIN)<br> * Whole document * | | 1 | B 65 D<br>A 01 G |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-09-1980 | MARTIN |

EPO Form 1503.1 06.78